# EUROPEAN PATENT SPECIFICATION

(11) **EP 3 808 510 B1**
(45) Date of publication and mention of the grant of the patent: **18.12.2024**
(21) Application number: 19382905.8
(22) Date of filing: 16.10.2019
(51) Int. Cl.: B25J 5/00, B62D 55/065, B62D 55/116, B25J 11/00

(54) **TELE-COMMANDED ROBOT**
FERNGESTEUERTER ROBOTER
ROBOT TÉLÉCOMMANDÉ

(43) Date of publication of application: 21.04.2021
(73) Proprietor: Escribano Mechanical and Engineering, S.L., 28805 Alcalá de Henares (Madrid) (ES)
(72) Inventor: DE SOLIS MONTES, Rafael, 28050 Madrid (ES)
(74) Representative: Ungria López, Javier

(56) References cited:
- WO-A1-2018/172956
- DE-A1- 3 153 007
- US-A- 5 451 135

## Description

### Object of the invention

The following invention relates to a remote-controlled robot, belonging to the field of medium-sized robots and having as its essential object the detection, handling and deactivation of improvised explosive devices (IED), explosive ordnance disposal (EOD) or activities in nuclear, radiological, biological and chemical (NRBC) environments, as well as carrying out fact-finding missions and reconnaissance in situations of risk for individuals and other operations dependent on the payload coupled to them at any time.

In this way, the object of the medium-sized remote-controlled robot is to confront possible threats (EOD/IED/NRBC) in civil or military environments and carry out fact-finding missions and reconnaissance faced with complex situations in chemical, petrochemical or nuclear infrastructures, amongst others.

Thus, the robot is capable of rendering service in the civil and military field, in operations mainly requiring a compact robot that is easy to transport, has a medium weight, good mobility and dexterity and a sufficient capacity to handle objects with a medium weight and to allow an inaccessible environment to be visualised.

Another object of the invention is to provide the robot with a variable geometry when modifying its width based on the operational needs, giving it significant stability; in addition, the system is configured to automatically maintain the platform in a horizontal position, independently of the irregularities of the terrain, moving the roller elements required for that purpose and thus modifying its centre of gravity when it is lifting weights, to balance the same by means of moving the corresponding roller elements.

### Background of the invention

As is known, when explosive devices have to be handled or risk operations carried out, and even more so when human lives are at risk, robots are used which are remote-controlled by means of a portable control console, normally by an operator.

Said robots can also be used in other fields, since they comprise features allowing them to adapt to different needs, therefore being able to modify their size, their uses based on the design features and therefore being able to be used in perimeter surveillance in critical infrastructures such as petrochemical and nuclear plants and in large industries requiring high security control.

Sometimes the robot may be required to have a small or medium size, such that the document ES2546053 may be cited as the closest prior art, in which a "robot for handling suspicious ordnance" is described, being of the type of robots provided with movable traction means and reduced dimensions in order to access reduced spaces, such as the interior of buses, trains and airplanes, being able to inspect, handle and deactivate explosive ordnance, incorporating in the upper surface of the tankette body a rotating base with a load sensor and having four movable traction means by means of track mechanisms, two at each side of the tankette body, actuated by respective motors with corresponding encoders, controlling the position, speed and torque independently and with a traction belt for each movable means actuated by a pair of motors for their transmission two-by-two and inertial sensors and inclination sensors which, together with the independent control of the track mechanisms, maintain the tankette body in the horizontal position or in an inclined position, based on the needs.

Document DE3153007A1 and document US 5451135 disclose an adjustment device for a vehicle with variable chassis geometry that comprises a platform joined to a robotised arm, articulated means which connect the platform to two transmission mounts, and the two transmission mounts connected to the roller means, wherein said articulated means are configured to laterally displace the transmission mounts with respect to the platform between two adjustable positions: a folded position, and a deployed position, such that during the lateral displacement of the transmission mounts are maintained oriented in one same direction with respect to the platform.

Document WO2018/172956 discloses a large-scale, high-mobility all-terrain vehicle (ATV), equipped with at least two articulated front legs and at least two articulated rear legs each provided with a respective track assembly driven by a respective electric motor directly associated with the track assembly. Each articulated leg is connected in an articulated manner to the vehicle structure about two mutually orthogonal axes to allow both a variation of the track width distance between each pair of track assemblies and a variation of the height of the vehicle structure with respect to each track assembly.

### Description of the invention

In this way, the invention consists of a remote-controlled robot, configured to be used remotely, either by means of a cabled or wireless connection, by an operator via an operator control unit or have pre-programmed autonomous control.

Its preferred function consists of handling ordnance, preferably explosive ordnance, also comprising the capacity to carry out pre-programmed routes or rounds, giving it the capacity for autonomous surveillance.

Said robot comprises a chassis connected to a robotised arm and to roller means, wherein said chassis comprises a platform joined to the robotised arm by means of a movable articulated joint, articulated means which connect the platform to two transmission mounts and the two transmission mounts connected to the roller means.

The articulated means are configured, when actuated, to laterally displace the transmission mounts with respect to the platform between two adjustable positions, selected from a folded position in which the transmission mounts are folded up with respect to the platform and a deployed position where the transmission mounts are extended with respect to said platform. These positions can be selected by the operator of the robot or automatically by the robot.

This folded and deployed lateral displacement means that the orientation of the platform does not vary with respect to the orientation of the transmission mounts, it being a parallel displacement. In this way, the width of the robot can be adapted to the needs of the operation to be carried out.

In addition, given that during the lateral displacement of the transmission mounts, they are kept oriented in one same direction with respect to the platform, the roller means are always kept in the operating position, the robot being able to function with the roller means in any position which the transmission mounts adopt.

Each articulated means comprises a driving rod, which comprises one end connected to a side of the platform and another end connected to the transmission mount, and a driven rod which comprises one end connected to a lower surface of the platform and another end connected to the transmission mount.

The term rod is used to explain that it concerns pieces whose ends are articulated and therefore transform a rotational movement into a longitudinal movement.

Said connections of the rods with the platform and with the transmission mounts are articulated and the sides of the platform, to which the driving rods are connected, are opposing.

The driving rods are preferably connected by a central part of the platform, both at the same height and symmetrically, while the driven rods are arranged in a stepped manner, at different lengths of the platform, which provides greater stability to the articulated structure in the manner of a quadrilateral.

When said articulated means comprise two articulated rods, instead of one, it allows the transmission mounts to not become decentred; they are only laterally displaced, always remaining oriented in the same direction.

In one embodiment, in the folded position, the transmission mounts are situated under the platform, and in the deployed position, the transmission mounts are situated displaced to opposing sides of the platform, covering the entire width that the robot can adopt.

In this lateral displacement of the transmission mounts, when carried out by means of articulated means connected to the platform, it moves closer to or away from the ground on which the roller means are supported when the deployment or folding is produced, respectively.

In one embodiment, each articulated means comprises a geared motor connected to the driving rod, such that said geared motor activates the folding and deployment of the transmission mounts with respect to the platform.

In one embodiment, the articulated means are configured to modify the inclination of the transmission mounts with respect to the platform. This is achieved if one of the rods, driving or driven, consists of or comprises a linear actuator, which when expanded or stretched out, joined to the articulated joint of the rods themselves, allows the rotation of the mounts.

In one embodiment, the movable articulated joint which connects the robotised arm to the platform is removable and is situated on an upper surface of said platform, being configured so that the robotised arm rotates with respect to a normal axis of said upper surface.

In one embodiment, each one of the articulated means which laterally displace the transmission mounts with respect to the platform comprise an independent actuation for each one such that if said actuation is due to each one of the geared motors connected to the driving rods, said motors are not connected. This feature allows the robot to not always be arranged symmetrically, but rather be adapted to the external conditions of use, being able to have one mount folded and another deployed.

In another embodiment, the two articulated means which laterally displace the transmission mounts with respect to the platform, comprise a dependent actuation for the two transmission mounts. In this way, if said actuation is due to the geared motors connected to the driving rods, said motors are connected so that the displacement of both is the same. This feature allows the robot to always be displaced symmetrically, facilitating the stability of the robot on flat terrain.

In one embodiment, each transmission mount is connected to two roller means each situated at ends of an external side of said mount. In this way, the roller means are always located on the outermost part of the robot.

In one embodiment, the roller means are connected to a second connector of the transmission mounts in a removable connection and are selected within a group consisting of track conversion systems, wheels and a combination of the foregoing.

In a preferred embodiment, each one of said track conversion systems comprises a triangular or trapezoidal shape, that is to say, it comprises various flat support surfaces with the ground.

In one embodiment, each one of the track mechanisms comprises an actuation configured to rotate said mechanisms modifying their orientation with respect to the transmission mounts. In this way, the trapezoidal or triangular shape can rotate about some of its points, allowing support of the mechanism on different flat surfaces that it comprises, which can increase or reduce the height of the platform with respect to the ground on which the robot is supported. Said actuation can be actuated based on linear actuators connected to each one of the track conversion mechanisms.

In a preferred embodiment, the actuations of each one of the track conversion systems are independent with respect to the rest of the track conversion systems, of the roller means comprised in the robot.

All the actuations indicated both for the displacement of the platform and for the roller means are configured so that the platform of the robot is always kept in a horizontal position, thereby facilitating the work to be carried out by it, either handling ordnance or any other work.

In one embodiment, the robotised arm comprises:
- a turret connected in an articulated manner to a first connector of an upper surface of the platform, said turret configured to rotate with respect to a normal axis of said upper surface;
- a three-segment link joined contiguously and in an articulated manner, connected in an articulated manner to the turret at one first end of said link and to a handling instrument at a second end; and
- the handling instrument configured to rotate about itself in a torsional direction.

In one embodiment, each one of the three segments can comprise a linear actuator configured to extend and reduce a length of said segments. With this configuration, a robotic arm has the capacity to adopt multiple dispositions at longer distances.

Each one of the joints between the segments comprise a geared motor with angular movement having an encoder which allows each segment to move with respect to its predecessor.

The handling instrument can have different uses such as a clamp, a retention element, operation or even a combination of various instruments with cameras which allow visualisation in locations that are difficult to access.

In one embodiment, the remote-controlled robot comprises a processing unit of the robot, configured to control the functioning of the robot, that is to say, of each one of its components which it includes, connected in a cabled manner or wirelessly to a remote operator control unit.

In one embodiment, the roller means, the robotised arm, the articulated means and the transmission mounts comprise, each one of them, an electronic identification system. At the same time, the robot comprises a communication system which connects said electronic identification systems to the processing unit of the robot, configured to detect and identify said electronic systems and transmits to the operator control unit whether the roller means, the robotised arm, the articulated means and the transmission mounts are connected without the need for visual confirmation.

In one embodiment, the remote-controlled robot comprises a set of sensors connected to the processing unit of the robot, configured to measure the parameters such as inclination, orientation, position, temperature and weight supported by the robot.

Said control unit receives the signal measured by the indicated sensors, and configures the components of the robot based on said signals. In fact, in one embodiment, the processing unit of the robot comprises a system configured to visualise, identify and map an environment close to the remote-controlled robot based on the sensors which it includes.

In this way, the control unit allows the robot to have the capacity to move freely in an autonomous manner, having anti-collision systems which allow the robot to detect and avoid obstacles during its operation.

As a complement to the description provided herein, and for the purpose of helping to make the features of the invention more readily understandable, this specification is accompanied by a set of figures, which by way of illustration and not limitation, represent the most characteristic details of the invention.

### Brief description of the figures

Figure 1 shows an exploded view of the remote-controlled robot in which the main components comprised in the robot are visualised, where the roller elements are four track mechanisms situated at the ends of a side of each one of the transmission mounts.
Figure 2 shows a perspective view of the remote-controlled robot without the roller elements, wherein the transmission mounts are situated in a deployed position with respect to the platform and comprising the partially deployed robotised arm.
Figure 3 shows a perspective view of the remote-controlled robot, with four track mechanisms as the roller means, wherein the transmission mounts are situated in a folded position with respect to the platform.
Figure 4 shows a perspective view of the remote-controlled robot of Figure 3, wherein the two transmission mounts are situated in a deployed position with respect to the platform, the platform having a lower height with respect to the ground than in the folded position of the mounts of Figure 3.
Figure 5a shows a lateral view of the remote-controlled robot with the transmission mounts partially deployed with respect to the platform and the robotic arm completely folded.
Figure 5b shows a front view of the remote-controlled robot of Figure 5a.
Figure 5c shows a plan view of the remote-controlled robot of Figure 5a.
Figure 6a shows a front view of the remote-controlled robot wherein the transmission mounts are in a folded position, situated under the platform, the roller means being four track mechanisms, these being rotated with respect to the position shown in Figures 5a-5c, the platform being at a greater height, with respect to the ground, than the height shown in said figures.
Figure 6b shows a lateral view of the remote-controlled robot of Figure 6a.
Figure 7 shows a front section of the chassis of the remote-controlled remote without the roller means, in which the articulated joint means are shown which connect the platform to the transmission mounts, said transmission mounts being in a folded position, under the platform.
Figure 8 shows a plan section of the chassis shown in Figure 7.
Figure 9 shows a front section of the chassis of the remote-controlled robot without the roller means, wherein the transmission mounts are situated in a deployed position with respect to the platform, displaced to the sides symmetrically.
Figure 10 shows a plan section of the chassis shown in Figure 9.
Figure 11 shows a perspective view of the remote-controlled robot, the roller means of which are four wheels, the transmission mounts being in a folded position and said four wheels under the platform.
Figure 12 shows a perspective view of the remote-controlled robot of Figure 11, wherein the transmission mounts are in a deployed position with respect to the platform.
Figure 13 shows a perspective view of the remote-controlled robot with four roller means, each one comprising a combination of a wheel with a track mechanism, the transmission mounts being in a folded position.
Figure 14 shows a perspective view of the remote-controlled robot of Figure 13, wherein the transmission mounts are in a deployed position with respect to the platform.
Figure 15 shows a front view of the remote-controlled robot in a position of use or displacement along an irregular surface, the transmission mounts being partially deployed, the roller means comprising four track mechanisms, said track mechanisms being partially rotated with respect to the platform, the platform maintaining a horizontal position.
Figure 16 shows an elevation view of the remote-controlled robot of Figure 15.

### Description of a preferred embodiment

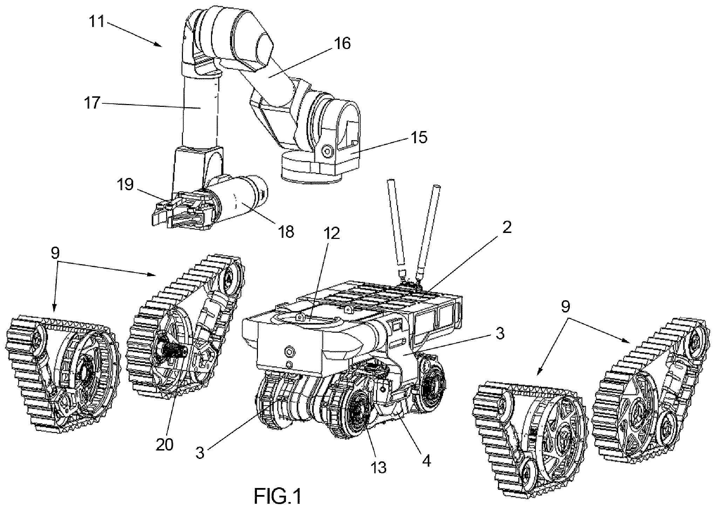

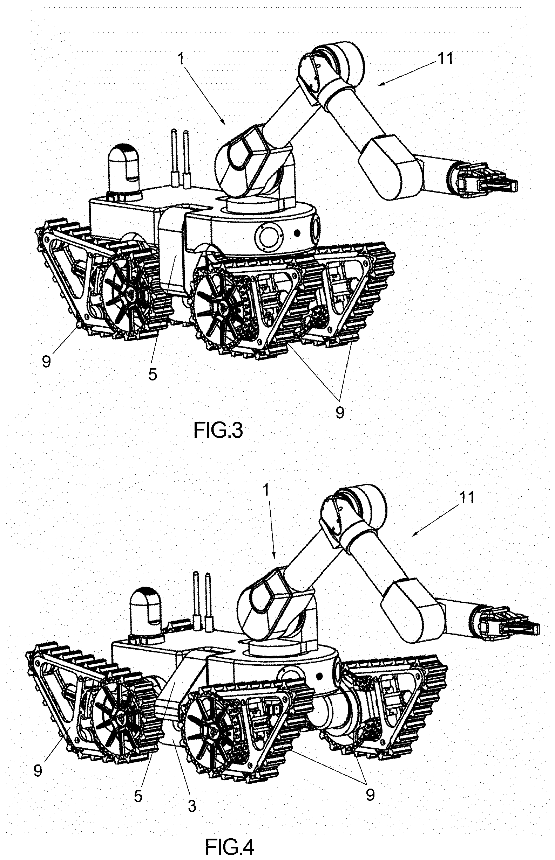

In view of the figures provided, specifically in Figures 1 and 3, and according to the numbering adopted, a remote-controlled robot (1) can be observed which comprises a modular configuration essentially based on a platform (2) or body of the robot (1) which is connected by its sides and by its lower surface to two transmission mounts (3, 4), respectively, by means of articulated means.

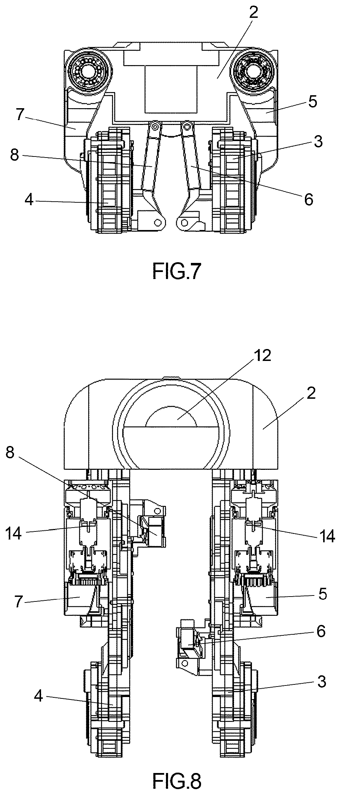

As can be seen in the Figures 7 to 10, the robot (1) comprises said two articulated means, operational independently of one another, each situated at each side of the platform (2), wherein each one of said means comprises a driving rod (5, 7) which comprises an end connected to a side of the platform (2) and another end connected to the transmission mount (3, 4) and a driven rod (6, 8) which comprises an end connected to a lower surface of the platform (2) and another end also connected to the transmission mount (3, 4). That is to say, each transmission mount (3, 4) is connected to the platform (2) by means of two rods such that the connections are all articulated. In addition, the driving rods (5, 7) are connected to a geared motor (14) which are the elements which activate the lateral displacement of the mounts (3, 4), said geared motors (14) being independent between the two articulated means.

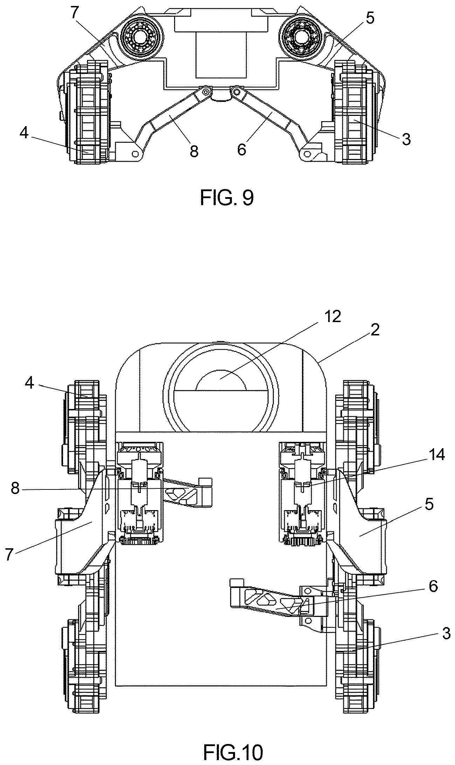

As can be observed in Figures 8 and 10, the driven rods (6, 8) are unaligned with one another in different planes transversal to the longitudinal axis of the robot (1).

Due to the fact that the articulated means consist of rods, both transmission mounts (3, 4) can be laterally displaced from a folded position, shown in Figures 7 and 8, to a deployed position, shown in Figures 9 and 10, adapting the width and height of the robot (1) to the needs of the operation to be carried out by the robot, without the transmission mounts (3, 4) modifying their orientation with respect to the platform (2), being displaced in a parallel position. In addition, due to the independent functioning mentioned, it is possible that one of the transmission mounts (3, 4) is in a position different from the other, that is to say, not symmetric with respect to the platform (2) in case it is required by the conditions of use of the robot (1), either to improve the balance of the same or to access restricted spaces.

The robot (1) also comprises roller means (9, 10) joined by means of a removable joint to the transmission mounts (3, 4) and a robotised arm (11) connected in an articulated joint to a first connector (12) of an upper surface of the platform (2).

As the distance between the transmission mounts (3, 4), which support the roller means (9, 10) can vary, the shape and size of the robot (1) can be varied based on the operational needs, said robot (1) then comprising a size of between 400 mm and 680 mm of total width. In addition, due to the fact that the supports (3, 4) are only moved in the lateral and parallel direction, the roller means (9, 10) can function in any position which said mounts (3, 4) adopt, from the folded position to the deployed position, without the need to stop its functioning.

In terms of the roller means (9, 10), the figures show different configurations that the robot (1) can have, such that preferably said roller means (9, 10) are four means connected at the exterior ends of the transmission mounts (3, 4), that is to say, a means (9, 10) at each end of each mount (3, 4).

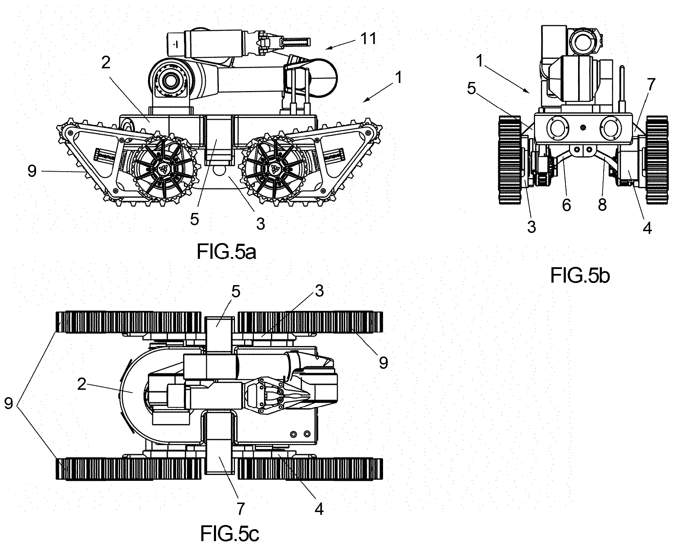

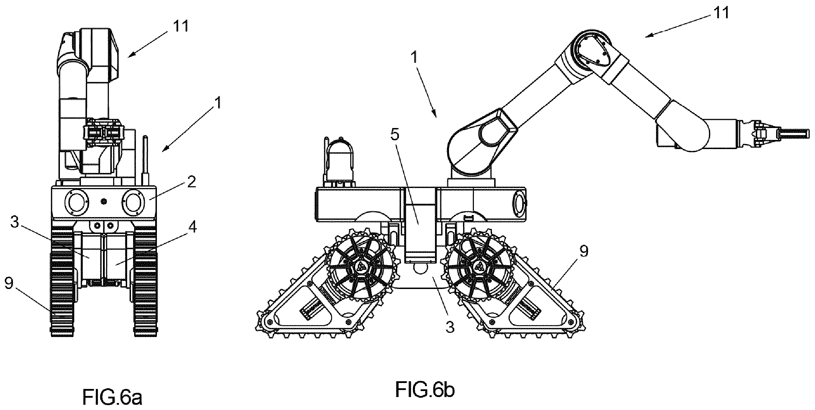

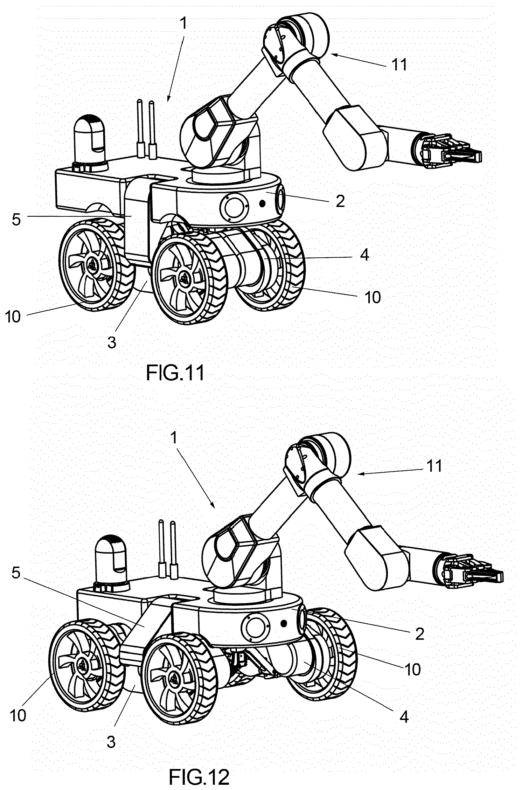

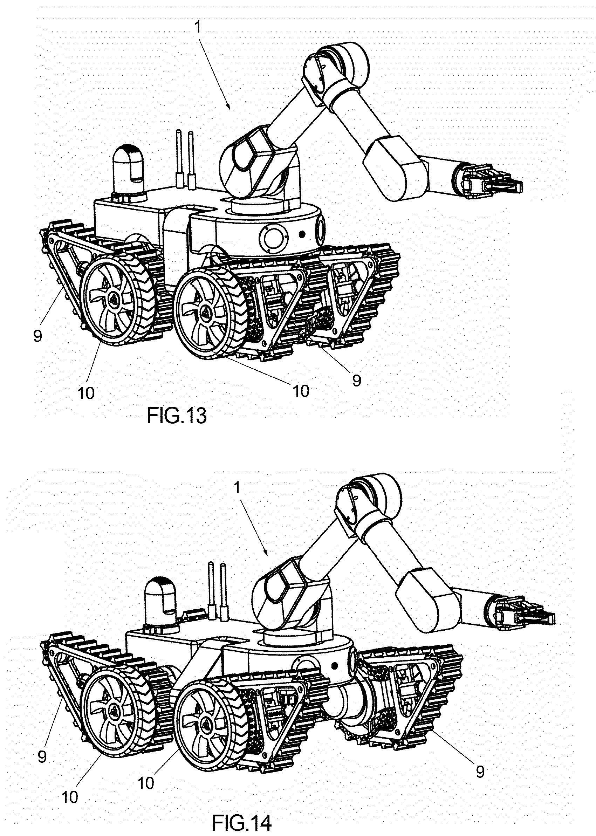

These roller means (9, 10) can consist of track conversion systems (9), shown in Figures 1 and 3 to 6, wheels (10), shown in Figures 11 and 12, or a combination of the foregoing track conversion systems (9) with wheels (10), as shown in Figures 13 and 14.

The roller means (9, 10) which consist of track conversion systems (9) comprise a triangular or trapezoidal shape, with spliced or rounded corners, a radius dependent on the size of the rotational components which form it.

One of the significant advantages of this embodiment of the invention is that, in addition to being able to modify the width of the robot (1) by means of the articulated means, also affecting the height of the platform (2), it can modify the position of the track conversion systems (9) with respect to the platform (2), being able to rotate them with respect to a point, modifying the height at which the platform (2) is located with respect to the ground. In fact, the track conversion systems can rotate until being supported only on their corners, while it maintains the balance of the platform (2).

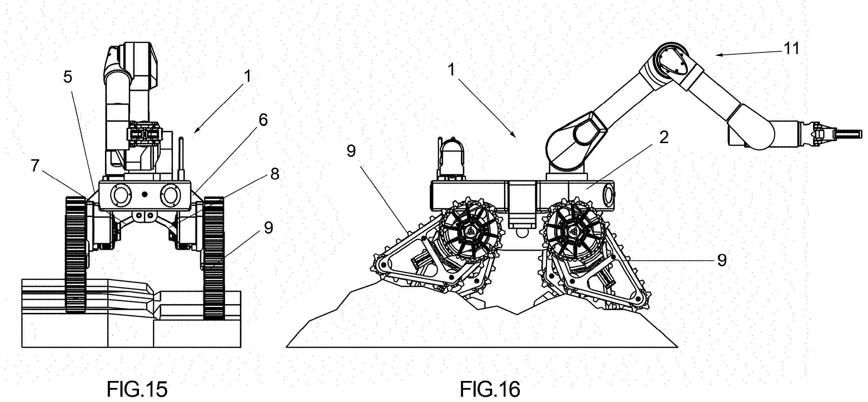

This modification of the position of the track conversion systems (9) is due to an actuation which each comprises, each one of said actuations being independent among all the track conversion systems (9). That is to say, each one of the track conversion systems (9) can be positioned in a different orientation or position, as shown in Figures 15 and 16.

The objective of the independent actuations of the track conversion systems (9), and of the articulated means, also independent, which connect the platform (2) to the transmission mounts (3, 4), is to be able to maintain the platform (2) in a position suitable for use, either horizontal in the majority of cases, or a different position where a weight loaded by the robot (1) and/or the robotised arm (11) must be compensated.

In addition, independently of what the roller means (9, 10) comprised in the robot (1) are, due to the configuration both of the articulated means and of the platform (2), in a folded position, all the roller means (9, 10) are located under the platform (2), as shown in the Figures 3, 6, 11 and 13, and in a deployed position, they are located separated a distance from the sides of the platform (2), as is shown in Figures 4, 5, 12, 14 to 16.

In terms of the robotised arm (11), as can be observed in the figures, it comprises a turret (15) connected in an articulated manner to a first connector (12) of an upper surface of the platform (2), said turret (15) configured to rotate with respect to a normal axis of said upper surface of the platform (2) by an angle of 360°.

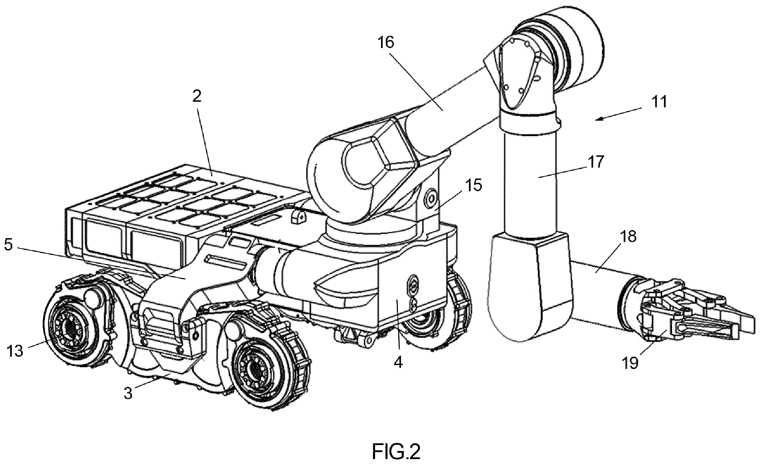

Said turret (15) is connected by means of an articulated connection to a first end of a three-segment link (16, 17, 18) joined contiguously and also in an articulated manner to one another, such that the second end of the link is connected to a handling instrument (19) configured to rotate about itself in a torsional direction, said handling instrument (19) being a clamp, as is shown in Figure 2.

In order for the elements included in the robot (1) to function correctly, the robot comprises a processing unit which controls and communicates with said electromechanical elements. Said processing unit is wirelessly connected, either by means of radio frequency, Bluetooth or Wi-Fi, to a remote operator control unit which allows the operation and control by an operator situated at a distance away from the robot.

In addition, the roller means (9, 10), the robotised arm (11), the articulated means and the transmission mounts (3, 4) comprise an electronic identification system connected to the processing unit of the robot (1) by means of a communication system. These electronic control systems detect and identify whether the roller means (9, 10), the robotised arm (11), the articulated means and the transmission mounts (3, 4) are connected to the platform (2) without the need for visual confirmation by the operator.

The robot (1) also comprises a set of sensors connected to the processing unit of the robot (1), configured to measure the inclination, the orientation, the position, the temperature and weight supported by the robot (1), or by the robotic arm (11). In addition, the robot (1) comprises a system configured to visualise, identify and map the environment close to the robot (1) based on powerful calculation algorithms, carried out based on the measurements performed by said sensors.

This system allows the processing unit, once an analysis of the data of the terrain provided has been carried out, to act on the position of the roller elements (9, 10), especially on the track conversion systems (9), moving them such that the platform always remains in the horizontal position or in a position suitable for the use carried out.

The modularity of the elements included in the robot (1) is associated with the advantage of its transportability since the different robot users have two main requirements which a robot must meet in terms of its transport, which are:
- that it can be transported on small vehicles; and
- that it can be transported by two individuals from one location to another if it cannot access the location on its own or by being transported in a vehicle.

Thus, given that the robot (1) is basically composed of the platform (2), the transmission mounts (3, 4), the roller means (9, 10) and the robotised arm (11), its total weight being around 120 kg and the volume that it occupies when assembled is high, preventing it from being transported without machinery by two individuals nor carried with ease on small vehicles, the cited modularity enables the two previous requirements to be meet such that the elements included can be disassembled and assembled quickly and easily. This means that the weight of each individual component can be properly carried by one or two individuals, allowing the elements to be moved from one location to another.

In this way, the joining mechanism between the robotised arm (11) and the platform (2) of the robot (1) is a rapid assembly system composed of positioner elements which allow both components to face one another easily without needing to look for an established adjustment position. In fact, once the robotised arm (11) is positioned in the first connector (12), the anchoring system between the parts can be actuated, thus providing a rigid joint between both elements.

On the other hand, the track conversion systems (9) can be joined by means of a removable joint to the transmission mounts (3, 4) since said systems comprise a joint bushing mechanism (20) in which articulation and traction mechanisms of the track conversion system (9) itself coexist such that each bushing mechanism (2) comprises a positioner flange which is connected simply and intuitively to a second connector (13) of each transmission mount (3, 4). Once positioned, a single central joining bolt should be tightened which joins both parts in a solid manner.

As the robot (1) can be separated into various elements, the volume of each element on its own is less than that of the robot (1) in its entirety and each module can be positioned and stored separately.

In addition to the clamp, the robot (1) can incorporate a series of accessories based on the needs to be carried out, said accessories also comprising an electronic identification system connected to the processing unit of the robot (1) such that it can identify that the device is connected to the robot (1) without the need to visualise it.

## Claims

1. A remote-controlled robot (1) for handling ordnance, which comprises a chassis connected to an arm and to roller means (9, 10), wherein said chassis comprises:
- a platform (2) joined to a robotised arm (11) by means of a movable articulated joint;
- articulated means which connect the platform (2) to two transmission mounts (3, 4); and
- the two transmission mounts (3, 4) connected to the roller means (9, 10);
wherein said articulated means are configured, when actuated, to laterally displace the transmission mounts (3, 4) with respect to the platform (2) between two adjustable positions, selected from:
- a folded position, where the transmission mounts (3, 4) are folded up with respect to the platform (2); and
- a deployed position, where the transmission mounts (3, 4) are extended with respect to said platform (2);
wherein during the lateral displacement of the transmission mounts (3, 4), said transmission mounts (3, 4) are maintained oriented in one same direction with respect to the platform (2);
**characterised in that** each articulated means comprises:
- a driving rod (5, 7), which comprises one end connected to a side of the platform (2) and another end connected to the transmission mount (3, 4); and
- a driven rod (6, 8) which comprises one end connected to a lower surface of the platform (2) and another end connected to the transmission mount (3, 4);
wherein said connections between the rods (5, 6, 7, 8) to the platform (2) and to the transmission mounts (3, 4) are articulated; and
wherein the sides of the platform (2), to which the driving rods (5, 7) are connected, are facing one another.

2. The remote-controlled robot (1) according to claim 1, wherein the transmission mounts (3, 4) are situated under the platform (2) in the folded position and transmission mounts (3, 4) are situated displaced to opposing sides of the platform (2) in the deployed position.

3. The remote-controlled robot (1) according to any of the preceding claims, wherein each articulated means comprises a geared motor (14) connected to the driving rod (5, 7).

4. The remote-controlled robot (1) according to any of the preceding claims, wherein the articulated means are configured to modify the inclination of the transmission mounts with respect to the platform (2).

5. The remote-controlled robot (1) according to any of the preceding claims, wherein the movable articulated joint which connects the robotised arm (11) to the platform (2) is removable and is situated on an upper surface of said platform (2) and is configured so that the robotised arm (11) rotates with respect to a normal axis of said upper surface.

6. The remote-controlled robot (1) according to any of the preceding claims, wherein each one of the articulated means which laterally displace the transmission mounts (3, 4) with respect to the platform (2) comprise an independent actuation for each one of the two transmission mounts (3, 4).

7. The remote-controlled robot (1) according to any of claims 1 to 5, wherein the two articulated means which laterally displace the transmission mounts (3, 4) with respect to the platform (2) comprise a dependent actuation for each one of the two transmission mounts (3, 4).

8. The remote-controlled robot (1) according to any of the preceding claims, wherein each transmission mount (3, 4) is connected to two roller means (9, 10) each situated at ends of an exterior side of said mount (3, 4).

9. The remote-controlled robot (1) according to any of the preceding claims, wherein the roller means (9, 10) are connected to a second connector (13) of the transmission mounts (3, 4) by means of a removable connection and are selected from a group consisting of track conversion systems (9), wheels (10) and a combination of the foregoing.

10. The remote-controlled robot (1) according to the preceding claim, wherein each one of the track conversion systems (9) comprises a triangular or trapezoidal shaped section.

11. The remote-controlled robot (1) according to the preceding claim, wherein each one of the track mechanisms (9) comprises an actuation configured for rotating said mechanisms (9) modifying its orientation with respect to the transmission mounts (3, 4).

12. The remote-controlled robot (1) according to the preceding claim, wherein the actuation of the track mechanisms (9) are independent with respect to the rest of the track conversion systems (9) of the roller means comprised in the robot (1).

13. The remote-controlled robot (1) according to any of the preceding claims, wherein the robotised arm (11) comprises:
- a turret (15) connected in an articulated manner to a first connector (12) of an upper surface of the platform (2), said turret (15) configured to rotate with respect to a normal axis of said upper surface;
- a three-segment link (16, 17, 18) joined contiguously and in an articulated manner, connected in an articulated manner to the turret (15) at one first end of said link and to a handling instrument (19) at a second end; and
- the handling instrument (19) configured to rotate about itself in a torsional direction.

14. The remote-controlled robot (1) according to any of the preceding claims, wherein it comprises a processing unit of the robot (1) configured for controlling the functioning of the robot (1) connected in a cabled manner or wirelessly to a remote operator control unit.

15. The remote-controlled robot (1) according to the preceding claim, wherein the roller means (9, 10), the robotised arm (11), the articulated means and the transmission mounts (3, 4) comprise, each one of them, an electronic identification system; and
wherein the robot (1) comprises a communication system which connects said electronic identification systems to the processing unit of the robot (1), configured to detect and identify said electronic systems and transmit to the operator control unit whether the roller means (9, 10), the robotised arm (11), the articulated means and the transmission mounts (3, 4) are connected.

16. The remote-controlled robot (1) according to any of claims 14 or 15, wherein it comprises a set of sensors connected to the processing unit of the robot (1), configured to measure at least one of the parameters selected from: inclination, orientation, position, temperature and weight supported by the robot (1).

17. The remote-controlled robot (1) according to any of claims 14 to 16, wherein the processing unit of the robot (1) comprises a system configured to visualise, identify and map an environment close to the remote-controlled robot (1).

## Patentansprüche

1. Ferngesteuerter Roboter (1) für die Handhabung von Kampfmitteln, der ein mit einem Arm und mit Rolleinrichtungen (9, 10) verbundenes Fahrwerk umfasst, wobei das Fahrwerk umfasst:
- eine Plattform (2), die über eine bewegliche Gelenkverbindung mit einem robotisierten Arm (11) verbunden ist,
- Gelenkeinrichtungen, die die Plattform (2) mit zwei Getriebelagern (3, 4) verbinden,
- die zwei Getriebelager (3, 4), die mit den Rolleinrichtungen (9, 10) verbunden sind, wobei die Gelenkeinrichtungen konfiguriert sind, um bei einer Betätigung die Getriebelager (3, 4) lateral in Bezug auf die Plattform (2) zwischen zwei einstellbaren Positionen zu verschieben, die ausgewählt sind aus:
- einer geklappten Position, in der die Getriebelager (3, 4) in Bezug auf die Plattform (2) geklappt sind, und
- einer ausgefahrenen Position, in der die Getriebelager (3, 4) in Bezug auf die Plattform (2) ausgefahren sind,
wobei während der lateralen Verschiebung der Getriebelager (3, 4) die Getriebelager (3, 4) in der gleichen Richtung in Bezug auf die Plattform (2) ausgerichtet gehalten werden,
**dadurch gekennzeichnet, dass** jede Gelenkeinrichtung umfasst:
- eine Antriebsstange (5, 7), deren eines Ende mit einer Seite der Plattform (2) verbunden ist und deren anderes Ende mit dem Getriebelager (3, 4) verbunden ist, und
- eine angetriebene Stange (6, 8), deren eines Ende mit einer unteren Fläche der Plattform (2) verbunden ist und deren anderes Ende mit dem Getriebelager (3, 4) verbunden ist,
wobei die Verbindungen der Stangen (5, 6, 7, 8) mit der Plattform (2) und mit den Getriebelagern (3, 4) gelenkig sind, und
wobei die Seiten der Plattform (2), mit denen die Antriebsstangen (5, 7) verbunden sind, einander zugewandt sind.

2. Ferngesteuerter Roboter (1) nach Anspruch 1, wobei die Getriebelager (3, 4) in der geklappten Position unter der Plattform (2) angeordnet sind und wobei die Getriebelager (3, 4) in der ausgefahrenen Position zu gegenüberliegenden Seiten der Plattform (2) verschoben sind.

3. Ferngesteuerter Roboter (1) nach einem der vorstehenden Ansprüche, wobei jede Gelenkeinrichtung einen mit der Antriebsstange (5, 7) verbundenen Getriebemotor (14) umfasst.

4. Ferngesteuerter Roboter (1) nach einem der vorstehenden Ansprüche, wobei die Gelenkeinrichtungen konfiguriert sind zum Modifizieren der Neigung der Getriebelager in Bezug auf die Plattform (2).

5. Ferngesteuerter Roboter (1) nach einem der vorstehenden Ansprüche, wobei die bewegliche Gelenkverbindung, die den robotisierten Arm (11) mit der Plattform (2) verbindet, entfernbar ist, an einer oberen Fläche der Plattform (2) angeordnet ist und derart konfiguriert ist, dass sich der robotisierte Arm (11) in Bezug auf eine normale Achse der oberen Fläche dreht.

6. Ferngesteuerter Roboter (1) nach einem der vorstehenden Ansprüche, wobei jede der Gelenkeinrichtungen, die die Getriebelager (3, 4) lateral in Bezug auf die Plattform (2) verschieben, eine unabhängige Betätigung für jedes der zwei Getriebelager (3, 4) vorsieht.

7. Ferngesteuerter Roboter (1) nach einem der Ansprüche 1 bis 5, wobei die zwei Gelenkeinrichtungen, die die Getriebelager (3, 4) lateral in Bezug auf die Plattform (2) verschieben, eine abhängige Betätigung für jedes der zwei Getriebelager (3, 4) vorsieht.

8. Ferngesteuerter Roboter (1) nach einem der vorstehenden Ansprüche, wobei jedes Getriebelager (3, 4) mit zwei Rolleinrichtungen (9, 10) jeweils an Enden einer Außenseite des Getriebelagers (3, 4) verbunden ist.

9. Ferngesteuerter Roboter (1) nach einem der vorstehenden Ansprüche, wobei die Rolleinrichtungen (9, 10) mit einem zweiten Verbindungsteil (13) der Getriebelager (3, 4) mittels einer entfernbaren Verbindung verbunden sind und aus der Gruppe ausgewählt sind, die Schienenwandlungssysteme (9), Räder (10) und eine Kombination aus diesen umfasst.

10. Ferngesteuerter Roboter (1) nach dem vorstehenden Anspruch, wobei jedes der Schienenwandlungssysteme (9) einen dreieckigen oder trapezförmigen Querschnitt aufweist.

11. Ferngesteuerter Roboter (1) nach dem vorstehenden Anspruch, wobei jeder der Schienenmechanismen (9) eine Betätigung für das Drehen der Mechanismen (9) umfasst, um deren Ausrichtung in Bezug auf die Getriebelager (3, 4) zu modifizieren.

12. Ferngesteuerter Roboter (1) nach dem vorstehenden Anspruch, wobei die Betätigungen der Schienenmechanismen unabhängig von dem Rest der Schienenwandlungssysteme (9) der Rolleneinrichtungen in dem Roboter (1) sind.

13. Ferngesteuerter Roboter (1) nach einem der vorstehenden Ansprüche, wobei der robotisierte Arm (11) umfasst:
- einen Turm (15), der gelenkig mit einem ersten Verbindungsteil (12) an einer oberen Fläche der Plattform (2) verbunden ist, wobei der Turm (15) konfiguriert ist für eine Drehung in Bezug auf eine normale Achse der oberen Fläche,
- eine drei aneinander anschließende und gelenkig verbundene Segmente umfassende Verbindung (16, 17, 18), die an einem ersten Ende der Verbindung gelenkig mit dem Turm (15) und an einem zweiten Ende mit einem Handhabungsinstrument (19) verbunden ist, und
- das Handhabungsinstrument (19), das konfiguriert ist, um sich in einer Torsionsrichtung um sich selbst zu drehen.

14. Ferngesteuerter Roboter (1) nach einem der vorstehenden Ansprüche, der eine Verarbeitungseinheit des Roboters (1) umfasst, die konfiguriert ist für das Steuern der Funktionen des Roboters (1) und über Kabel oder drahtlos mit einer fernen Bedienersteuereinheit verbunden ist.

15. Ferngesteuerter Roboter (1) nach einem der vorstehenden Ansprüche, wobei die Rolleinrichtungen (9, 10), der robotisierte Arm (11), die gelenkigen Einrichtungen und die Getriebelager (3, 4) jeweils ein elektronisches Identifikationssystem umfassen, und wobei der Roboter (1) ein Kommunikationssystem umfasst, das die elektronischen Identifikationssysteme mit der Verarbeitungseinheit des Roboters (1) verbindet, konfiguriert ist zum Erfassen und Identifizieren der elektronischen Systeme und zum Senden an die Bedienersteuereinheit einer Angabe dazu, ob die Rolleinrichtungen (9, 10), der robotisierte Arm (11), die Gelenkeinrichtungen und die Getriebelager (3, 4) verbunden sind.

16. Ferngesteuerter Roboter (1) nach einem der Ansprüche 14 oder 15, wobei dieser einen Satz von Sensoren umfasst, die mit der Verarbeitungseinheit des Roboters (1) verbunden sind, konfiguriert sind, zum Messen wenigstens eines Parameters, der aus einer Neigung, Ausrichtung, Position, Temperatur und dem durch den Roboter (1) unterstützten Gewicht ausgewählt ist.

17. Ferngesteuerter Roboter (1) nach einem der Ansprüche 14 bis 16, wobei die Verarbeitungseinheit des Roboters (1) ein System umfasst, das konfiguriert ist zum Visualisieren, Identifizieren und Kartieren einer Umgebung in unmittelbarer Nähe zu dem ferngesteuerten Roboter (1).

## Revendications

1. Robot télécommandé (1) pour la manipulation d'armes, qui comprend un châssis relié à un bras et à des moyens de roulement (9, 10), dans lequel ledit châssis comprend:
- une plateforme (2) jointe à un bras robotisé (11) au moyen d'une jonction articulée mobile;
- des moyens articulés qui relient la plateforme (2) à deux supports de transmission (3, 4); et
- les deux supports de transmission (3, 4) reliés aux moyens de roulement (9, 10);
dans lequel lesdits moyens articulés sont configurés, lorsqu'ils sont actionnés, pour déplacer latéralement les supports de transmission (3, 4) par rapport à la plateforme (2) entre deux positions réglables, choisies parmi:
- une position pliée, dans laquelle les supports de transmission (3, 4) sont repliés par rapport à la plateforme (2); et
- une position déployée, dans laquelle les supports de transmission (3, 4) sont étendus par rapport à ladite plateforme (2);
dans lequel pendant le déplacement latéral des supports de transmission (3, 4), lesdits supports de transmission (3, 4) sont maintenus orientés dans une même direction par rapport à la plateforme (2);
**caractérisé en ce que** chaque moyen articulé comprend:
- une tige d'entraînement (5, 7), qui comprend une extrémité reliée à un côté de la plateforme (2) et une autre extrémité reliée au support de transmission (3, 4); et
- une tige entraînée (6, 8) qui comprend une extrémité reliée à une surface inférieure de la plateforme (2) et une autre extrémité reliée au support de transmission (3, 4);
dans lequel lesdites liaisons entre les tiges (5, 6, 7, 8) à la plateforme (2) et aux supports de transmission (3, 4) sont articulées; et
dans lequel les côtés de la plateforme (2), auxquels sont reliées les tiges d'entraînement (5, 7), se font face mutuellement.

2. Robot télécommandé (1) selon la revendication 1, dans lequel les supports de transmission (3, 4) sont situés sous la plateforme (2) dans la position pliée et les supports de transmission (3, 4) sont situés déplacés vers des côtés opposés de la plateforme (2) dans la position déployée.

3. Robot télécommandé (1) selon l'une quelconque des revendications précédentes, dans lequel chaque moyen articulé comprend un motoréducteur (14) relié aux tiges d'entraînement (5, 7).

4. Robot télécommandé (1) selon l'une quelconque des revendications précédentes, dans lequel les moyens articulés sont configurés pour modifier l'inclinaison des supports de transmission par rapport à la plateforme (2).

5. Robot télécommandé (1) selon l'une quelconque des revendications précédentes, dans lequel la jonction articulée mobile qui relie le bras robotisé (11) à la plateforme (2) est amovible et est située sur une surface supérieure de ladite plateforme (2) et est configurée de sorte que le bras robotisé (11) tourne par rapport à un axe normal de ladite surface supérieure.

6. Robot télécommandé (1) selon l'une quelconque des revendications précédentes, dans lequel chacun des moyens articulés qui déplacent latéralement les supports de transmission (3, 4) par rapport à la plateforme (2) comprend un actionnement indépendant pour chacun des deux supports de transmission (3, 4).

7. Robot télécommandé (1) selon l'une quelconque des revendications 1 à 5, dans lequel les deux moyens articulés qui déplacent latéralement les supports de transmission (3, 4) par rapport à la plateforme (2) comprennent un actionnement dépendant pour chacun des deux supports de transmission (3, 4).

8. Robot télécommandé (1) selon l'une quelconque des revendications précédentes, dans lequel chaque support de transmission (3, 4) est relié à deux moyens de roulement (9, 10) situés chacun aux extrémités d'un côté extérieur dudit support (3, 4).

9. Robot télécommandé (1) selon l'une quelconque des revendications précédentes, dans lequel les moyens de roulement (9, 10) sont reliés à un deuxième organe de liaison (13) des supports de transmission (3, 4) au moyen d'une liaison amovible et sont choisis dans un groupe consistant en les systèmes de conversion en chenilles (9), les roues (10) et une combinaison de ce qui précède.

10. Robot télécommandé (1) selon la revendication précédente, dans lequel chacun des systèmes de conversion en chenilles (9) comprend une section de forme triangulaire ou trapézoïdale.

11. Robot télécommandé (1) selon la revendication précédente, dans lequel chacun des mécanismes à chenilles (9) comprend un actionnement configuré pour faire tourner lesdits mécanismes (9) modifiant son orientation par rapport aux supports de transmission (3, 4).

12. Robot télécommandé (1) selon la revendication précédente, dans lequel l'actionnement des mécanismes à chenilles (9) est indépendant par rapport au reste des systèmes de conversion en chenilles (9) des moyens de roulement compris dans le robot (1).

13. Robot télécommandé (1) selon l'une quelconque des revendications précédentes, dans lequel le bras robotisé (11) comprend:
- une tourelle (15) reliée de manière articulée à un premier organe de liaison (12) d'une surface supérieure de la plateforme (2), ladite tourelle (15) configurée pour tourner par rapport à un axe normal de ladite surface supérieure;
- une liaison à trois segments (16, 17, 18) jointe de manière contiguë et de manière articulée, reliée de manière articulée à la tourelle (15) à une première extrémité de ladite liaison et à un instrument de manipulation (19) à une deuxième extrémité; et
- l'instrument de manipulation (19) configuré pour tourner sur lui-même dans une direction de torsion.

14. Robot télécommandé (1) selon l'une quelconque des revendications précédentes, dans lequel il comprend une unité de traitement du robot (1) configurée pour commander le fonctionnement du robot (1) reliée de manière câblée ou sans fil à une unité de commande d'opérateur à distance.

15. Robot télécommandé (1) selon la revendication précédente, dans lequel les moyens de roulement (9, 10), le bras robotisé (11), les moyens articulés et les supports de transmission (3, 4) comprennent, chacun d'eux, un système d'identification électronique; et
dans lequel le robot (1) comprend un système de communication qui relie lesdits systèmes d'identification électronique à l'unité de traitement du robot (1), configurée pour détecter et identifier lesdits systèmes électroniques et transmettre à l'unité de commande d'opérateur si les moyens de roulement (9, 10), le bras robotisé (11), les moyens articulés et les supports de transmission (3, 4) sont reliés.

16. Robot télécommandé (1) selon l'une quelconque des revendications 14 ou 15, dans lequel il comprend un ensemble de capteurs reliés à l'unité de traitement du robot (1), configurés pour mesurer au moins l'un des paramètres choisis parmi: l'inclinaison, l'orientation, la position, la température et le poids supporté par le robot (1).

17. Robot télécommandé (1) selon l'une quelconque des revendications 14 à 16, dans lequel l'unité de traitement du robot (1) comprend un système configuré pour visualiser, identifier et cartographier un environnement proche du robot télécommandé (1).
